# EUROPÄISCHE PATENTSCHRIFT

(11) **EP 4 240 572 B1**
(45) Veröffentlichungstag und Bekanntmachung des Hinweises auf die Patenterteilung: **25.09.2024**
(21) Anmeldenummer: 21802687.0
(22) Anmeldetag: 02.11.2021
(51) Int. Cl.: B29C 49/46, B29L 31/00, B29C 49/06, B29C 49/12, B29C 49/36

(54) **VORRICHTUNG ZUM HERSTELLEN VON BEHÄLTERN DURCH UMFORMEN VON VORFORMLINGEN AUS THERMOPLASTISCHEM MATERIAL**
DEVICE FOR PRODUCING CONTAINERS BY SHAPING PREFORMS MADE OF A THERMOPLASTIC MATERIAL
DISPOSITIF DE PRODUCTION DE RÉCIPIENTS PAR FORMAGE DE PRÉFORMES CONSTITUÉS D'UN MATÉRIAU THERMOPLASTIQUE

(30) Priorität: 04.11.2020 DE 102020129111
(43) Veröffentlichungstag der Anmeldung: 13.09.2023
(73) Patentinhaber: KHS GmbH, 44143 Dortmund (DE)
(72) Erfinder: LINKE, Michael, 22159 Hamburg (DE); BAUMGARTE, Rolf, 22926 Ahrensburg (DE); KLÖPPER, Gerhard, 22391 Hamburg (DE)
(74) Vertreter: Greiche, Albert
(86) Internationale Anmeldenummer: PCT/EP2021/080290
(87) Internationale Veröffentlichungsnummer: WO 2022/096420

(56) Entgegenhaltungen:
- DE-A1- 102014 018 778
- US-A- 4 018 860
- US-A1- 2019 358 888

## Beschreibung

Die Erfindung betrifft eine Vorrichtung zum Herstellen von Behältern durch Umformen von Vorformlingen aus thermoplastischem Material.

Zur Herstellung von Behältern aus thermoplastischem Kunststoff, werden Vorformlinge thermisch konditioniert und in Vorrichtungen, die mindestens eine Formeinheit aufweisen, zu Behältern gereckt bzw. umgeformt. Die Formeinheiten nehmen in einem Aufnahmebereich einen Vorformling auf und werden zu einem Übergabebereich bewegt. Währenddessen wird der Vorformling in der Formeinheit zu einem Behälter gereckt. Der Behälter kann in dem Übergabebereich aus der Formeinheit entnommen werden. Die Formeinheit wird nach der Entnahme wieder zu dem Aufnahmebereich bewegt. Das Recken der Vorformlinge kann dabei mittels eines Fluids erfolgen. Das Fluid kann gasförmig oder flüssig sein.

Bei der Verwendung von Flüssigkeiten zum Recken der Vorformlinge können Flüssigkeiten verwendet werden, die ohnehin in dem fertig geformten Behälter gefüllt werden sollen, so dass der Reckvorgang mit dem Füllvorgang zusammenfällt. Bei der Verwendung von Flüssigkeiten zum Recken der Vorformlinge kann jedoch die eingefüllte Flüssigkeit an die Formeinheit gelangen. Dies kann zum Beispiel durch Undichtigkeiten oder durch das Platzen oder Auswerfen von Behältern oder Vorformlingen vor, während oder nach der Reckphase erfolgen.

Um zu verhindern, dass die Flüssigkeit an der Formeinheit den Formungsprozess stört, zum Beispiel durch Kühleffekte, die der thermischen Konditionierung des Vorformlings entgegenwirken, oder als Fremdkörper oder Klebekörper, die die Ausformung der Behälter beim Recken in der Formeinheit behindern, ist es bekannt, die nassen Formeinheiten manuell zu trocknen. Dazu wird die Vorrichtung zur Herstellung der Behälter gestoppt und die betreffende Formeinheit und gegebenenfalls weitere Komponenten der Vorrichtung durch Bedienpersonal von Hand getrocknet. Damit gehen Stillstands-Zeiten der Vorrichtung bei der Herstellung der Behälter mit Produktionsausfällen einher, wodurch die Kosteneffizienz reduziert wird.

Weiter ist aus DE 10 2014 216 562 A1 bekannt, die Formeinheit in eine Reinigungsposition zu bringen und mit einem Trocknungsgas zu trocknen. Das Trocknungsgas wird in mittels einer Reinigungseinrichtung auf die Formeinheit aufgebracht. Jeder Formeinheit ist eine Reinigungseinrichtung zugeordnet, die im laufenden Betrieb die Formeinheit reinigen kann. Allerdings ist dies kostenintensiv, da zusätzlich zu jeder Formeinheit jeweils eine Reinigungseinrichtung benötigt wird.

Weitere Gattungsgemäße Vorrichtungen und Verfahren sind in den Patentschriften DE102014018778A1 und US4018860A beschrieben.

Aufgabe der Erfindung ist es, eine verbesserte Vorrichtung und ein verbessertes Verfahren bereitzustellen, bei denen die Kosten reduziert werden.

Die Aufgabe wird gelöst durch die Merkmale der unabhängigen Ansprüche. Vorteilhafte Weiterbildungen sind Gegenstand der abhängigen Ansprüche sowie der folgenden Beschreibung. Bei einer Vorrichtung zum Herstellen von Behältern durch Umformen von Vorformlingen aus thermoplastischem Material, wobei die Vorrichtung eine Vielzahl von Formeinheiten, die jeweils mindestens zwei Formeinsätze und eine Vielzahl von zumindest in einem Übergabebereich bewegbaren Übergabeeinheiten zum Entnehmen des Behälters oder Vorformlings aus der Formeinheit aufweist, wobei die Formeinsätze innerhalb des Übergabebereiches in einer Öffnungsposition zum Übergeben eines Behälters oder Vorformlings angeordnet sind und außerhalb des Übergabebereiches in einer Schließposition eine Kammer zum Formen des Behälters aus einem Vorformling ausbilden, ist erfindungsgemäß vorgesehen, dass mindestens eine der Vielzahl der Übergabeeinheiten eine Trocknungsvorrichtung mit mindestens einer mit der Übergabeeinheit verbundenen Düse zum Auslassen eines Trocknungsgasstroms zum Trocknen zumindest eines Teilbereiches von die Kammer ausbildenden Innenbereichen der im Übergabebereich angeordneten Formeinsätze aufweist.

Mit der Erfindung wird eine Vorrichtung zum Herstellen von Behältern durch Formen von Vorformlingen aus thermoplastischem Material bereitgestellt, bei der im laufenden Betrieb eine Trocknung der Formeinsätze mittels der Trocknungsvorrichtung erfolgen kann. Dazu weisen die Übergabeeinheiten, die zum Entnehmen der Behälter aus den Formeinsätzen ausgebildet sind, mindestens eine Düse auf. Aus der Düse kann ein Trocknungsgasstrom in Richtung der Formeinheit strömen. Die Formeinheit weist dabei mindestens zwei Formeinsätze auf, die in einem Schließzustand eine Kammer bilden, in der ein Vorformling mittels einer Flüssigkeit zu einem Behälter gereckt wird. Die Kammer definiert die Form des herzustellenden Behälters. Im Übergabebereich, in dem die Übergabeeinheiten die Behälter aus den Formeinsätzen entnehmen, werden die Formeinsätze in eine Öffnungsposition führt, in der die Kammer geöffnet ist. Der hergestellte Behälter ist damit von außen zugänglich. Die Übergabeeinheit kann den Behälter aus der Formeinheit entnehmen. Platzt ein Behälter innerhalb der Kammer oder wird ein Behälter als Ausschuss ausgeworfen, können die Innenbereiche der Formeinsätze, die die Kammer bilden, mit der Flüssigkeit benetzt werden. Nach dem Entfernen des Behälters wird zum Trocknen dieser Innenbereiche der Trocknungsgasstrom aus der Düse an der Übergabeeinheit ausgelassen. Der Trocknungsgasstrom wird auf mindestens einen Teilbereich der die Kammer ausbildenden Innenbereiche gerichtet. Der Trocknungsgasstrom kann zumindest den Teilbereich der Innenbereiche der Formeinsätze trocknen. Dabei kann der Trocknungsgasstrom den Teilbereich zunächst lediglich teilweise trocknen, sodass noch eine Restfeuchte verbleiben kann. Da die Formeinsätze in der Regel zwischen dem Übergabebereich und einem Aufnahmebereich hin und her bewegt werden, kann bei Bedarf bei jeder Begegnung der Formeinheit mit der Übergabeeinheit, die eine Trocknungsvorrichtung aufweist, während der Durchquerung des Übergabebereiches eine weitere Trocknung erfolgen. Es kann daher bei jeder "Vorbeifahrt" einer Übergabeeinheit mit Trocknungsvorrichtung an der Formeinheit eine weiter Trocknung vorgenommen werden.

Falls sich noch Restfeuchte bzw. Restflüssigkeit in dem Formeinsatz befindet, kann die Formeinheit dazu ausgebildet sein, im Aufnahmebereich keinen Vorformling aufzunehmen. Sie ist dann aus dem Herstellprozess ausgeblendet. Dies vermeidet, dass mit der feuchten Formeinheit Behälter geformt werden. Erst nach der vollständigen Trocknung der Formeinsätze kann die Formeinheit wieder für die Aufnahme von Vorformlingen freigegeben, d.h. wieder eingeblendet, werden. Die weiteren Formeinheiten der Vorrichtung, die nicht mit Flüssigkeit benetzt wurden, können währenddessen weiter zur Produktion von Behältern verwendet werden.

Wenn die Vorrichtung in einer nicht produzierenden Phase ist, können die Übergabeeinheit und die zu trocknende Formeinheit beispielsweise wiederholt vorwärts und rückwärts durch den Übergabebereich bewegt werden. Damit kann die Formeinheit in kurzer Zeit getrocknet werden. Alternativ oder zusätzlich können die Übergabeeinheit und die Formeinheit in der nicht produzierenden Phase der Vorrichtung im Übergabebereich beispielsweise gestoppt werden. Die Trocknungsvorrichtung kann dann kontinuierlich einen Trocknungsgasstrom auf die Formeinheit strömen lassen.

Mit der Erfindung wird damit vermieden, dass die Vorrichtung zum Herstellen von Behältern zum Stillstand gebracht werden muss, um die Formeinsätze zu trocknen. Damit wird ein Produktionsausfall im Vergleich zur manuellen Trocknung reduziert, da lediglich die zu trocknende Formeinheit während der Trocknung im laufenden Betrieb ausfällt. Eine Reduktion der Kosteneffizienz wird damit vermindert. Weiter wird durch die Anordnung der Düsen an der Übergabeeinheit eine gleichmäßige Trocknung der Formeinsätze im Vorbeifahren bewirkt. Weiter können Kosten bei der Herstellung der Vorrichtung eingespart werden, da die Trocknungsvorrichtung einer einzigen Übergabeeinheit prinzipiell für alle Formeinheiten verwendet werden kann und nicht jeder Formeinheit eine gesonderte Trocknungsvorrichtung zugeordnet werden muss.

Denkbar ist, dass der Trocknungsgasstrom beispielsweise derart ausgerichtet werden kann, dass auch Bereiche der Außenseiten der Formeinsätze getrocknet werden können. Die kann zum Beispiel durch eine geeignete Auswahl der Düse und/oder durch Anordnen zusätzlicher Düsen erfolgen. Dabei ist weiter denkbar, dass insbesondere eine nach oben weisende Außenseite eines Formeinsatzes, der zum Beispiel eine Anschlagplatte für einen Neckring eines Vorformlings oder Behälters aufweist, getrocknet werden kann. So können Flüssigkeiten, die zwischen dem Neckring und den Anschlagplatten z. B. durch Kapillarkräfte eingesogen wurden, nach dem Entfernen des Behälters oder Vorformlings getrocknet werden.

Gemäß einem Beispiel kann die Trocknungsvorrichtung mindestens zwei Düsen aufweisen, wobei jede Düse zumindest im Übergabebereich auf jeweils einen Formeinsatz gerichtet sein kann.

Jede Düse kann dabei einen Teilbereich der Innenseiten des jeweiligen Formeinsatzes mit einem eigenen Trocknungsgasstrom beaufschlagen. Es können dabei weniger Düsen als Formeinsätze vorgesehen werden. Jede der Düsen ist dann einem der Formeinsätze zugeordnet, wobei den restlichen Formeinsätzen dann keine Düse zugeordnet sein kann. Umgekehrt kann die Anzahl der Düsen auch gleich oder größer der Anzahl der Formeinsätze sein. Dann kann jedem Formeinsatz mindestens eine Düse zugeordnet sein. Es können aber auch in diesem Fall Formeinsätze vorgesehen werden, denen keine Düse zugeordnet ist. Anderen Formeinsätzen werden stattdessen mehrere Düsen zugeordnet. Durch die erhöhte Anzahl der Düsen wird der Trocknungsvorgang der Formeinsätze beschleunigt.

Gemäß einem weiteren Beispiel kann die Vorrichtung eine im Übergabebereich angeordnete Luftschiene zum Bereitstellen des Trocknungsgasstroms aufweisen, wobei die mindestens eine Übergabeeinheit mindestens einen fluidkommunizierend mit der mindestens einen Düse verbundenen Gaseinlass aufweisen kann, der fluidkommunizierend mit der Luftschiene verbindbar ist.

Mit der Luftschiene wird mindestens ein Trocknungsgasstrom stationär bereitgestellt, der im Übergabebereich angeordnet ist. Der Trocknungsgasstrom kann von einem Gaseinlass der Übergabeeinheit aufgenommen und an die Düse weitergeleitet werden, wenn die Übergabeeinheit in dem Übergabebereich angeordnet ist. Mit der Luftschiene können damit alle Übergabeeinheiten, die in den Übergabebereich hinein bewegt werden, mit einem Trocknungsgasstrom versorgt werden, solange die Übergabeeinheiten im Übergabebereich sind. Es muss damit nicht für jede Übergabeeinheit eine gesonderte Versorgung für den Trocknungsgasstrom vorgesehen werden. Durch die zentrale Versorgung mit dem Trocknungsgasstrom für alle Übergabeeinheiten, werden Kosten gespart und der Aufbau und die Handhabung der Vorrichtung zur Herstellung der Behälter vereinfacht.

Der Gasauslass der Luftschiene kann in einem Beispiel innerhalb des Übergabebereiches synchron mit dem Gaseinlass der Übergabeeinheit bewegt werden. Damit kann im gesamten Übergabebereich eine Versorgung der Düse mit Trockengasstrom erfolgen. Sobald die Übergabeeinheit den Übergabebereich verlässt, kann der Gasauslass von dem Gaseinlass entkoppelt und für die Kopplung mit einer nachfolgenden Übergabeeinheit vorbereitet werden.

Weiter kann die Luftschiene zum Beispiel mindestens einen Gasauslass aufweist, der an einer Bewegungsstrecke der Übergabeeinheit im Übergabebereich angeordnet ist, wobei der mindestens eine Gasauslass zum Auslassen eines Trocknungsgasstroms ausgebildet ist und der Gaseinlass während einer Bewegung der Übergabeeinheit im Übergabebereich den mindestens einen Gasauslass fluidkommunizierend überstreicht.

Der mindestens eine Gasauslass ist damit stationär im Übergabebereich angeordnet. Der Gaseinlass bewegt sich entlang der Bewegungsstrecke und koppelt fluidkommunizierend an dem Gasauslass an. Wenn mehrere Gasauslässe an der Luftschiene angeordnet sind, koppelt der Gaseinlass nacheinander an die Gasauslässe an, während er die Bewegungsstrecke überstreicht. Die Gasauslässe können zum Beispiel ständig einen Trocknungsgasstrom bereitstellen. Alternativ kann der mindestens eine Gasauslass nur dann einen Trocknungsgasstrom bereitstellen, wenn der Gaseinlass mit dem mindestens einen Gasauslass fluidkommunizierend gekoppelt ist. In dieser Alternative können die Gasauslässe synchron zu der Bewegung des Gaseinlasses den Trocknungsgasstrom geschaltet werden.

Der Gaseinlass kann beispielsweise während einer Durchquerung des Übergabebereichs durch die Übergabeeinheit jederzeit mit mindestens einem Gasauslass fluidkommunizierend gekoppelt sein.

Wenn eine Vielzahl von Gasauslässen vorgesehen ist, können sie dazu derart angeordnet sein, dass der Gaseinlass beim Überstreichen der Bewegungsstrecke unmittelbar nach der Entkopplung von einem Gasauslass mit einem nachfolgenden Gasauslass gekoppelt werden kann. So können zum Beispiel die Gasauslässe entlang der Bewegungsstrecke sehr eng nebeneinander angeordnet sein. Auf diese Weise kann ein kontinuierlicher Trockengasstrom bereitgestellt werden. Alternativ würde ein gepulster Trockengasstrom bereitgestellt werden.

Weiter kann, wenn die Luftschiene mindestens zwei Gasauslässe aufweist, der Gaseinlass eine Öffnungsweite aufweisen, die mindestens einem Abstand zwischen den mindestens zwei Gasauslässen entsprechen kann.

In diesem Beispiel kann die Öffnungsweite des Gasauslasses so groß sein, dass sie den Abstand zwischen zwei Gasauslässen überbrückt. Der Gaseinlass ist während des Überstreichens der Bewegungsstrecke damit jederzeit fluidkommunizieren mit mindestens einem Gasauslass verbunden. Damit wird die Bereitstellung eines kontinuierlichen Trockengasstromes vereinfacht.

Einem weiteren Beispiel gemäß kann die Luftschiene eine Ventilinsel mit einer Vielzahl von die Gasauslässe beherrschenden Ventilen aufweisen.

Dazu kann je ein Ventil mit je einem Gasauslass fluidkommunizierend verbunden sein. Mittels der Ventilinsel wird die Ansteuerung der Gasauslässe vereinfacht. So kann die Ventilinsel en bloc das Öffnen und Schließen aller Gasauslässe steuern.

Ein Ventil kann zum Beispiel nur dann geöffnet sein, wenn der Gaseinlass mit dem von dem Ventil beherrschten Gasauslass verbunden ist.

Dazu ist der beherrschte Gasauslass fluidkommunizierend mit dem beherrschenden Ventil verbunden. Das beherrschende Ventil wird nur dann geöffnet, wenn der Gaseinlass der Übergabeeinheit mit dem Gasauslass fluidkommunizieren gekoppelt ist. Zur Detektion der Kopplung zwischen dem Gaseinlass und dem von dem Ventil beherrschten Gasauslass kann z. B. eine Sensoranordnung die Position der Übergabeeinheit ermitteln. Wenn die Übergabeeinheit an der Position des Gasauslasses ist, kann das ihn beherrschende Ventil geöffnet werden, um einen Trocknungsgasstrom aus dem Gasauslass strömen zu lassen. Dies kann Energie einsparen und die Kosten weiter verringern, da ein Gasauslass lediglich bei Bedarf einen Trocknungsgasstrom bereitstellt.

Weiter kann die Bewegungsstrecke zum Beispiel zumindest bereichsweise linear sein.

Mit einem linearen Verlauf der Bewegungsstrecke kann das Entnehmen des Behälters mit der Übergabeeinheit vereinfacht werden. Wenn eine Luftschiene mit einer Vielzahl von Gasauslässen verwendet wird, können die Gasauslässe in gerader Linie angeordnet sein. Dies kann die Herstellung der Luftschiene vereinfachen.

Die Luftschiene kann gemäß einem weiteren Beispiel mindestens ein Endstück mit einer Anlaufschräge entlang der Bewegungsstrecke aufweisen.

Wenn die Übergabeeinheit den Übergabebereich durchquert, trifft sie zunächst auf die Anlaufschräge der Luftschiene. Für die Anlaufschräge koppelt die Übergabeeinheit derart an die Luftschiene an, dass lediglich ein geringer Impuls von der Übergabeeinheit auf die Luftschiene übertragen wird. Mit der Anlaufschräge wird ein weicher Kopplungsvorgang zwischen Übergabeeinheit und der Luftschiene bewirkt.

Weiter kann die Übergabeeinheit einen Gleitkörper aufweisen, der den mindestens einen Gaseinlass aufweisen kann und gleitend auf der Luftschiene gelagert sein kann, wenn die Übergabeeinheit den Übergabereich durchquert.

Der Gleitkörper und die Luftschiene können in der Bewegungsebene der Übergabeeinheit entlang der Bewegungsstrecke überlappend angeordnet sein. Der Gleitkörper kann zum Ankoppeln an die Luftschiene federnd mit der Übergabeeinheit verbunden sein, so dass er bei Kontakt mit der Luftschiene quer zur Bewegungsstrecke verschoben wird und die Überlappung aufgehoben wird. Der Gleitkörper wird an die Luftschiene gedrückt und gleitet dann entlang der Bewegungsstrecke auf der Luftschiene. Der Gleitkörper kann zum Beispiel als Gleitklotz ausgebildet sein.

Die Luftschiene kann zum Beispiel zwischen einer Kopplungsstellung, in der die Luftschiene mit einem im Übergabebereich angeordneten Gaseinlass koppelbar ist, und einer Entkopplungsstellung, in der die Luftschiene entkoppelt von den im Übergabebereich angeordneten Gaseinlässen angeordnet ist, bewegbar sein.

Die Luftschiene kann damit in eine Entkopplungsstellung gebracht werden, in der sie nicht mehr mit einem Gaseinlass einer Übergabeeinheit gekoppelt werden kann. Dies kann zum Beispiel darüber folgen, dass die Luftschiene nach unten oder nach oben aus dem Übergabebereich weggeklappt wird. Die Luftschiene kann damit lediglich bei Bedarf in die Arbeitsposition, d.h. in die Kopplungsstellung gebracht werden. In der Entkopplungsstellung steht an der Position, die die Luftschiene in der Kopplungsstellung hat, mehr Platz zur Verfügung.

Weiter betrifft die Erfindung ein Verfahren zum Herstellen von Behältern durch Umformen von Vorformlingen aus thermoplastischem Material mittels einer Vorrichtung nach der vorhergehenden Beschreibung, wobei das Verfahren die folgenden Schritte umfasst: Bewegen mindestens einer Formeinheit und mindestens einer Übergabeeinheit durch einen Übergabebereich, wobei die Formeinheit einen Behälter oder Vorformling aufweist und im Übergabebereich in einer Öffnungsposition ist, in der eine von Formeinsätzen der Formeinheit in einer Schließposition gebildete Kammer geöffnet ist, und wobei die mindestens eine Übergabeeinheit eine Trocknungsvorrichtung umfasst; Überführen der Formeinheit in die Öffnungsposition; Entnehmen des Behälters oder Vorformlings mittels der Übergabeeinheit aus der Formeinheit; Auslassen eines Trocknungsgasstroms aus einer Düse der Trocknungsvorrichtung in Richtung zumindest eines Teilbereiches von die Kammer ausbildenden Innenbereichen der im Übergabebereich angeordneten Formeinsätze.

Vorteile und Wirkungen sowie Weiterbildungen des Verfahrens ergeben sich aus den Vorteilen und Wirkungen sowie Weiterbildungen der oben beschriebenen Vorrichtung. Zur Vermeidung von Wiederholungen wird daher in dieser Hinsicht auf die vorangegangene Beschreibung verwiesen.

Im Folgenden wird die Erfindung anhand einer beispielhaften Ausführungsform mittels der beigefügten Zeichnung beschrieben. Es zeigen:
- Figur 1: eine schematische Darstellung einer Vorrichtung zum Herstellen von Behältern;
- Figur 2a, b: eine schematische Darstellung des Übergabebereiches der Vorrichtung;
- Figur 3a, b: eine schematische Querschnittsdarstellung einer Übergabeeinheit in einem Übergabebereich; und
- Figur 4: ein Flussdiagramm des Verfahrens zum Herstellen von Behältern.

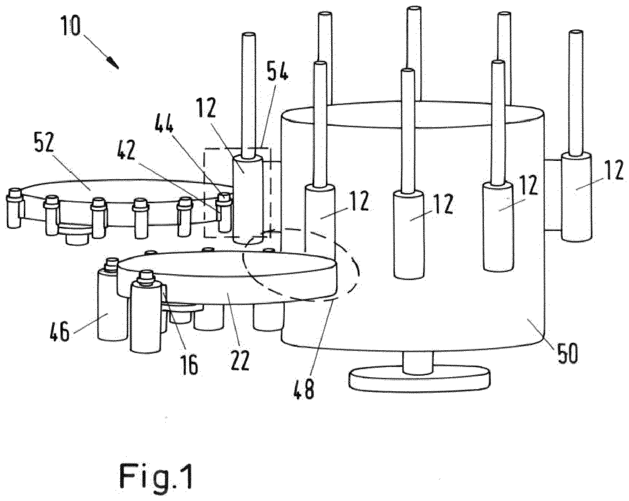

Die Vorrichtung zum Herstellen von Behältern durch Umformen von Vorformlingen aus thermoplastischem Material wird im Folgenden in ihrer Gesamtheit mit dem Bezugszeichen 10 bezeichnet, wie in Figur 1 dargestellt.

Die Vorrichtung 10 umfasst in diesem Beispiel ein Transportrad 52 für Vorformlinge 44, ein Füllrad 50 mit mindestens einer Formeinheit 12 und ein Transportrad 22 für Behälter 46. Die Vorformlinge 44 werden mittels Übergabevorrichtungen 42 an die Formeinheiten 12 des Füllrad 50 übergeben. Die Übergabe der Vorformlinge 44 an die Formeinheiten 12 erfolgt in einem Aufnahmebereich 54.

In den Formeinheiten 12 des Füllrads 50 werden die Vorformlinge 44 mittels einer Flüssigkeit zu Behältern 46 gereckt bzw. geformt. Die Flüssigkeit, mit der die Vorformlinge 44 zu Behältern 46 gereckt werden, kann die Flüssigkeit sein, mit denen die Behälter 46 befüllt werden sollen. Alternativ kann die Flüssigkeit nach dem Formprozess aus dem Behälter entfernt werden, z. B. mittels in den Behälter gedrückten Pressluft.

Die befüllten Behälter 46 werden in einem Übergabebereich 48 an das Transportrad 22 für Behälter 46 übergeben. Dabei entnehmen Übergabeeinheiten 16 die Behälter 46 aus den Formeinheiten 12.

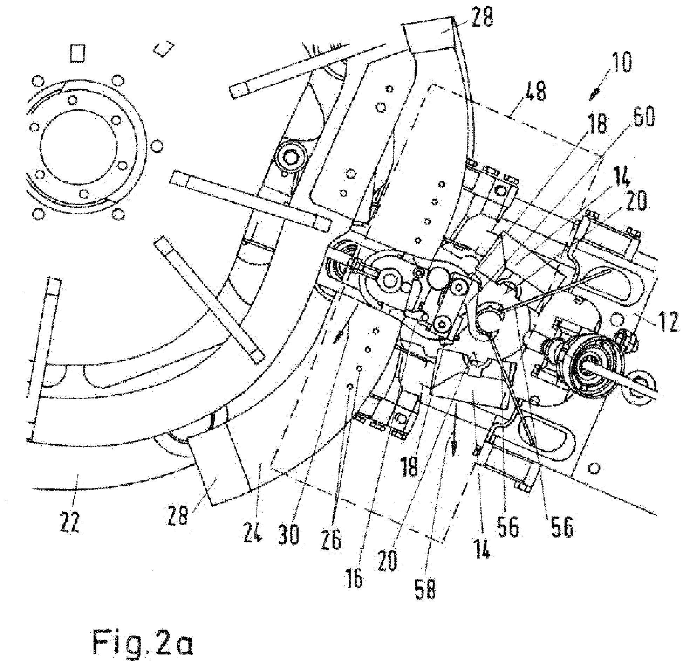

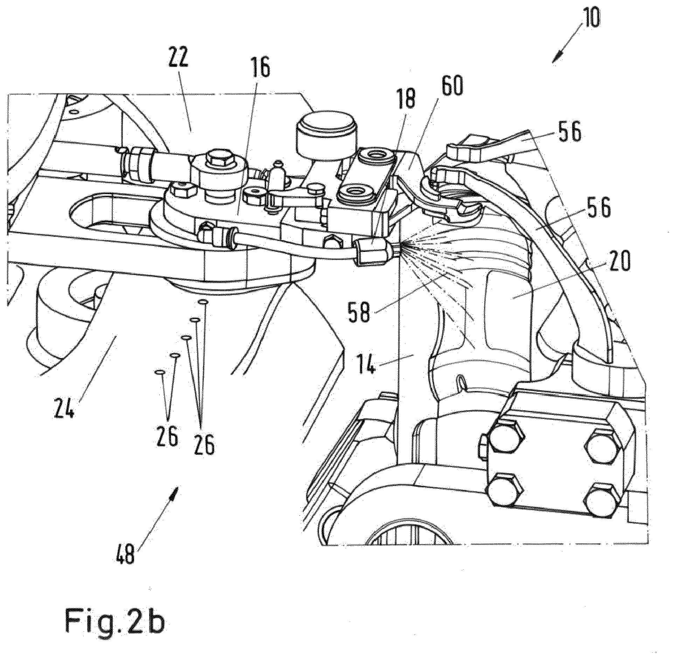

In den Figuren 2a und 2b ist der Übergabebereich 48 mit einer Formeinheit 12 und einer Übergabeeinheit 16 detaillierter als in Figur 1 dargestellt.

Figur 2a zeigt dabei eine Draufsicht auf den Übergabebereich 48. Die Formeinheit 12 weist mindestens zwei Formeinsätze 14 auf, die in Figur 2a in einer Öffnungsposition angeordnet sind. In der Öffnungsposition sind die Formeinsätze 14 so angeordnet, dass ein Behälter 46 an die Übergabeeinheit 16 übergeben werden kann. In einer Schließposition sind die Formeinsätze 14 aneinander angeordnet, wobei Innenbereiche 20 der Formeinsätze 14 eine Kammer zum Formen der Behälter 46 ausbilden.

Die Formeinheit 12 weist weiter eine Haltevorrichtung 56 auf, mit der die Behälter 46 gehalten werden. Die Haltevorrichtung 56 kann die Behälter 46 zum Beispiel mittels Federkraft halten.

Die Übergabeeinheit 16 kann eine Zange 60 aufweisen, mit der ein Behälter 46 aus der Haltevorrichtung 56 entnommen werden kann. Wie in Figur 2a dargestellt, ist die Übergabeeinheit 16 so angeordnet, dass die Zange 60 zwischen die Formeinsätze 14 greift und einen Behälter 46 entnehmen kann.

Der Entnahmeprozess erfolgt dynamisch während einer Bewegung der Übergabeeinheit 16 und Formeinheit 12. Die Formeinheit 12 bewegt sich dabei in Richtung des Pfeils 58. Die Übergabeeinheit 16 bewegt sich in Richtung des Pfeils 30. Die Formeinheit 12 und die Übergabeeinheit 16 durchqueren damit den Übergabebereich 48.

Die Übergabeeinheit 16 weist weiter eine Trocknungsvorrichtung mit mindestens einer Düse 18 auf. Die Düse 18 ist zum Auslassen eines Trocknungsgasstroms ausgebildet. Dazu ist die Düse 18 fluidkommunizierend mit einer Trocknungsgasquelle (nicht dargestellt) verbunden. Die Trocknungsgasquelle kann zum Beispiel eine Gasflasche oder eine Kompressorvorrichtung sein.

Falls ein befüllter Behälter 46 innerhalb der Formeinheit 12 platzen sollte, als Ausschuss ausgeworfen wird oder durch eine Undichtigkeit Flüssigkeit an die Innenbereiche 20 gelangt, kann mittels der Düse 18 der Trocknungsgasstrom auf die Innenbereiche 20 gerichtet werden.

Die Flüssigkeit bzw. Feuchte in den Formeinsätzen 14 kann zum Beispiel mittels eines Sensors (nicht dargestellt) festgestellt werden. Der Sensor kann beispielsweise ein optischer Sensor, zum Beispiel, eine digitale Kamera sein. Weiter kann der Sensor zum Beispiel ein Feuchtigkeitssensor sein, der an den Formeinsätzen 14 angeordnet ist.

Zumindest ein Teilbereich der Innenbereiche 20 wird dann durch den Trocknungsgasstrom getrocknet.

Der Trocknungsgasstrom kann durch eine Luftschiene 24 bereitgestellt werden, die mindestens einen Gasauslass 26 aufweist. Im vorliegenden Beispiel weist die Luftschiene 24 eine Vielzahl von Gasauslässen 26 auf. Der Trocknungsgasstrom strömt dabei durch die Gasauslässe 26. Während die Übergabeeinheit 16 sich durch den Übergabebereich 48 bewegt, koppelt sie an die Luftschiene 24 und die Gasauslässe 26 an. Sobald die Übergabeeinheit 16 an einen Gasauslass 26 ankoppelt, wird der Trocknungsgasstrom an der Übergabeeinheit 16 bereitgestellt und zu den Düsen 18 geleitet. Der Trocknungsgasstrom strömt dann durch die Düsen 18 in Richtung der Innenbereiche 20 der Formeinsätze 14.

Die Luftschiene 24 weist zur einfacheren Kopplung mit der Übergabeeinheit 16 Anlaufschrägen 28 auf. Damit wird vermieden, dass die bewegte Übergabeeinheit 16 bei einem Kontakt mit der Luftschiene 24 an einer Kante der Luftschiene 24 hängenbleibt. Somit werden Schäden an der Übergabeeinheit 16 und dem Transportrad 22 Behälter 46 vermieden.

Figur 2b zeigt eine perspektivische Ansicht des Übergabebereichs 48. Die Formeinsätze 14 sind in der Öffnungsposition. Weiter ist einer der Formeinsätze 14 nicht dargestellt, um einen besseren Überblick zu gewährleisten. In Figur 2b erlaubt daher eine freie Sicht auf den Innenbereich 20 eines Formeinsatzes 14. Dargestellt ist unter anderem der Trocknungsgasstrom 58, der von der Düse 18 in Richtung des Innenbereichs 20 des Formeinsatzes 14 strömt. Dabei wird ein Teilbereich des Innenbereichs 20 des Formeinsatzes 14 mit dem Trocknungsgasstrom beaufschlagt.

Weiter ist dargestellt, dass der Innenbereich 20 eine Negativform eines Teils des Behälters 46 aufweist. Wenn die Formeinsätze 14 der Formeinheit 12 in der Schließposition sind, bilden die Innenbereiche 20 der Formeinsätze 14 eine Kammer, die als Negativform zur Herstellung eines Behälters 46 fungiert.

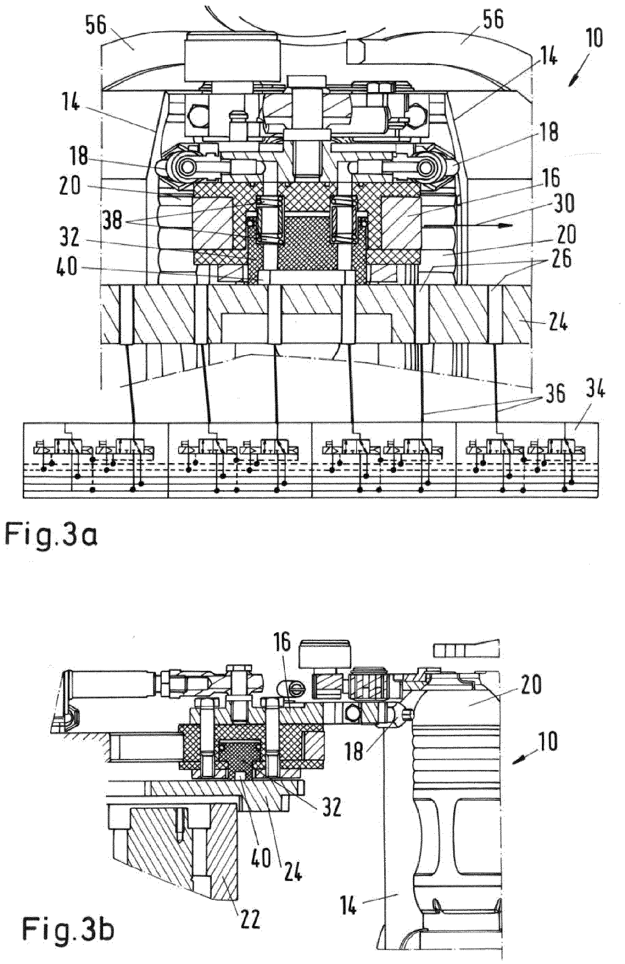

Die Figuren 3a und 3b zeigen Schnittdarstellungen durch die Übergabeeinheit 16 und die Luftschiene 24.

Die Schnittdarstellung in Figur 3a verläuft dabei parallel zu der Bewegungsrichtung 30 der Übergabeeinheit 16. Die Schnittdarstellung in Figur 3b verläuft quer zu der Bewegungsrichtung 30 der Übergabeeinheit 16.

Die Übergabeeinheit 16 weist einen Gleitkörper 32 auf, der gleitend auf der Luftschiene 24 gelagert sein kann, wenn die Übergabeeinheit 16 im Übergabebereich 48 angeordnet ist bzw. den Übergabebereich 48 durchquert. Der Gleitkörper 32 kann zum Beispiel ein Gleitklotz sein.

Der Gleitkörper 32 weist einen Gaseinlass 40 auf und kann über Federelemente 38 mit der Übergabeeinheit 16 verbunden sein. Mittels der Federelemente 38 können die Anlaufschrägen 28 sowie Unebenheiten auf der Luftschiene 24 ausgeglichen werden. Die Federelemente 38 können z. B. als Wellschläuche ausgebildet sein, die eine Leitung des Gleitkörpers 32 mit einer Leitung der Übergabeeinheit 16 verbinden.

Der Gaseinlass 40 ist so angeordnet, dass er bei einer Bewegung der Übergabeeinheit 16 die Vielzahl der Gasauslässe 26 überstreicht. Weiter weist der Gaseinlass 40 eine Öffnungsweite auf, die mindestens einem Abstand zwischen zwei Gasauslässen 26 entspricht. D.h., beim Überstreichen der Gasauslässe 26 ist der Gaseinlass 40 jederzeit mit mindestens einem Gasauslass 26 fluidkommunizierend gekoppelt. Trocknungsgas, das durch einen Gasauslass 26 strömt, der mit dem Gaseinlass 40 fluidkommunizierend gekoppelt ist, wird von dem Gaseinlass 40 aufgenommen und durch die Übergabeeinheit 16 zu der Düse 18 geführt.

Gemäß Figur 3b kann der Gaseinlass 40 quer zur Bewegungsrichtung der Übergabeeinheit 16 eine Breite aufweisen, die lediglich geringfügig größer als die Öffnung eines Gasauslasses 26 ist. Insgesamt weist eine Öffnung des Gaseinlasses 40 eine Form auf, die sich zum Beispiel schlitzartig in Richtung der Bewegungsrichtung 30 der Übergabeeinheit 16 erstrecken kann, um den Abstand zwischen zwei Gasauslässen 26 zu überbrücken.

Falls die Luftschiene 24 nicht benötigt wird, z. B. bei Wartungsarbeiten, kann sie z. B. nach unten weggeklappt werden. Sie kann auch im laufenden Betrieb nach unten geklappt werden und erst dann, wenn Feuchtigkeit auf den Innenbereichen eines Formeinsatzes 14 detektiert wird, in eine Arbeitsposition nach oben geklappt werden. Damit wird Energie eingespart, da die Reibung zwischen der Luftschiene 24 und der Übergabeeinheit 16 wegfällt, wenn keine Trocknung benötigt wird.

Der Luftschiene 24 kann ein Ventilblock 34 zugeordnet sein. Der Ventilblock 34 umfasst eine Vielzahl von Ventilen 36. Je ein Ventil 36 kann mit einem der Gasauslässe 26 der Luftschiene 24 sowie einer Trockengasquelle (nicht dargestellt) fluidkommunizierend verbunden sein. Die Verbindung kann zum Beispiel über Schlauchverbindungen erfolgen. Die Ventile 36 beherrschen durch die Verbindung die mit ihnen fluidkommunizierend gekoppelten Gasauslässe 26. Mit den Ventilen 36 des Ventilblocks 34 kann damit gesteuert werden, ob ein Gasauslass 26 einen Trocknungsgasstrom bereitstellt.

Dazu können die Ventile 36 so angesteuert werden, dass sie nur dann geöffnet sind, wenn der von ihnen beherrschte Gasauslass 26 mit dem Gaseinlass 40 fluidkommunizierend gekoppelt ist. D.h. wenn der Gaseinlass 40 über einem Gasauslass 26 angeordnet ist, wird das Ventil 36 geöffnet, das den entsprechenden Gasauslass 26 beherrscht. Gasauslässe 26, die nicht fluidkommunizierend mit dem Gaseinlass 40 gekoppelt sind, werden durch die sie beherrschenden Ventile 36 geschlossen. Es strömt daher lediglich an der Position der Übergabeeinheit 16 ein Trocknungsgasstrom aus einem Gasauslass 26.

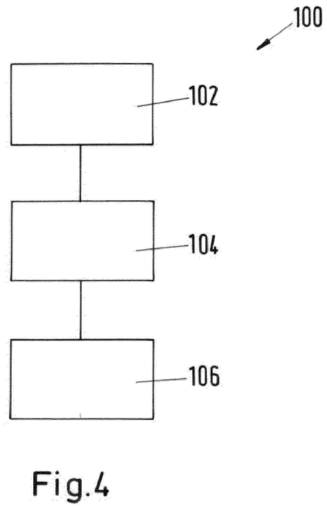

Das Verfahren zum Herstellen von Behältern durch Umformung von Vorformlingen aus thermoplastischem Material wird gemäß Figur 4 in seiner Gesamtheit mit dem Bezugszeichen 100 bezeichnet. Das Verfahren 100 wird mittels einer Vorrichtung 10, wie oben beschrieben, durchgeführt.

In einem ersten Schritt 102 werden mindestens eine Formeinheit und mindestens eine Übergabeeinheit der Vorrichtung 10 durch den Übergabebereich bewegt. Die Formeinheit weist dabei einen Behälter oder Vorformling auf, der mit der Flüssigkeit befüllt sein kann. In einer Schließposition weist die Formeinheit eine Kammer auf, die von den Formeinsätzen gebildet wird. Im Übergabebereich ist die Formeinheit bzw. die Kammer geöffnet. Weiter weist die mindestens eine Übergabeeinheit eine Trocknungsvorrichtung auf.

An der Formeinheit kann optional detektiert werden, ob ein Behälter oder Vorformling Flüssigkeit verloren hat. Dies kann zum Beispiel mittels eines Sensors an der Formeinheit erfolgen, der zum Beispiel ein optischer Sensor oder ein Feuchtigkeitssensor sein kann.

In einem weiteren Schritt 104 wird der Behälter oder Vorformling mittels der Übergabeeinheit auf der Formeinheit entnommen. Die Übergabeeinheit kann dazu eine Zange aufweisen, mit der sie den in der Formeinheit gehaltenen Behälter oder Vorformling greifen und aus einer Haltevorrichtung der Formeinheit ziehen kann.

In einem weiteren Schritt 106 kann ein Teilbereich des Innenbereichs der Formeinsätze mit der Trocknungsvorrichtung getrocknet werden. Dazu weist die Trocknungsvorrichtungsdüsen auf, die eine Übergabeeinheit angeordnet sind. Die Düsen lassen einen Trocknungsgasstrom in Richtung der Teilbereiche aus.

Die Trocknung kann im laufenden Betrieb der Vorrichtung 10 erfolgen. Dabei erfolgt der Trocknungsprozess dann, wenn die Übergabeeinheit und die Formeinheit den Übergabebereich durchqueren. Die weiteren Formeinheiten und Übergabeeinheiten der Vorrichtung 10 können ohne Unterbrechung für die weitere Produktion von Behältern verwendet werden.

Falls die Vorrichtung 10 nicht produziert, kann eine Trocknung erfolgen, in dem die Übergabeeinheit mit der Trocknungsvorrichtung und die zu trocknende Formeinheit ständig im Übergangsbereich hin und her bewegt werden. Alternativ können die Übergabeeinheit und die Formeinheit stationär im Übergangsbereich angeordnet werden, bis die Formeinheit bzw. die Formeinsätze getrocknet sind.

### Bezugszeichenliste

- 10: Vorrichtung
- 12: Formeinheit
- 14: Formeinsatz
- 16: Übergabeeinheit
- 18: Düse
- 20: Innenbereich
- 22: Transportrad für Behälter
- 24: Luftschiene
- 26: Gasauslass
- 28: Anlaufschräge
- 30: Bewegungsrichtung
- 32: Gleitkörper
- 34: Ventilblock
- 36: Ventil
- 38: Federelement
- 40: Gaseinlass
- 42: Übergabevorrichtung
- 44: Vorformling
- 46: Behälter
- 48: Übergabebereich
- 50: Füllrad
- 52: Transportrad für Vorformlinge
- 54: Aufnahmebereich
- 56: Haltevorrichtung
- 58: Trocknungsgasstrom
- 60: Zange

## Patentansprüche

1. Vorrichtung zum Herstellen von Behältern (46) durch Umformen von Vorformlingen (44) aus thermoplastischem Material, wobei die Vorrichtung (10) eine Vielzahl von Formeinheiten (12), die jeweils mindestens zwei Formeinsätze (14) und eine Vielzahl von zumindest in einem Übergabebereich (48) bewegbaren Übergabeeinheiten (16) zum Entnehmen des Behälters (46) oder Vorformlings (44) aus der Formeinheit (12) aufweist, wobei die Formeinsätze (14) innerhalb des Übergabebereiches (48) in einer Öffnungsposition zum Übergeben eines Behälters (46) oder Vorformlings (44) angeordnet sind und außerhalb des Übergabebereiches (48) in einer Schließposition eine Kammer zum Formen des Behälters (46) aus einem Vorformling ausbilden, **dadurch gekennzeichnet, dass** mindestens eine der Vielzahl der Übergabeeinheiten (16) eine Trocknungsvorrichtung mit mindestens einer mit der Übergabeeinheit (16) verbundenen Düse (18) zum Auslassen eines Trocknungsgasstroms (58) zum Trocknen zumindest eines Teilbereiches von die Kammer ausbildenden Innenbereichen (20) der im Übergabebereich (48) angeordneten Formeinsätze (14) aufweist.

2. Vorrichtung nach Anspruch 1, **dadurch gekennzeichnet, dass** die Trocknungsvorrichtung mindestens zwei Düsen (18) aufweist, wobei jede Düse (18) zumindest im Übergabebereich (48) auf jeweils einen Formeinsatz (14) gerichtet ist.

3. Vorrichtung nach Anspruch 1 oder 2, **dadurch gekennzeichnet, dass** die Vorrichtung (10) eine im Übergabebereich (48) angeordnete Luftschiene (24) zum Bereitstellen des Trocknungsgasstroms (58) aufweist, wobei die mindestens eine Übergabeeinheit (16) mindestens einen fluidkommunizierend mit der mindestens einen Düse (18) verbundenen Gaseinlass (40) aufweist, der fluidkommunizierend mit der Luftschiene (24) verbindbar ist.

4. Vorrichtung nach Anspruch 3, **dadurch gekennzeichnet, dass** die Luftschiene (24) mindestens einen Gasauslass (26) aufweist, der an einer Bewegungsstrecke der Übergabeeinheit (16) im Übergabebereich angeordnet ist, wobei der mindestens eine Gasauslass (26) zum Auslassen eines Trocknungsgasstroms (58) ausgebildet ist und der Gaseinlass (40) während einer Bewegung der Übergabeeinheit (16) im Übergabebereich den mindestens einen Gasauslass (26) fluidkommunizierend überstreicht.

5. Vorrichtung nach Anspruch 4, **dadurch gekennzeichnet, dass** der Gaseinlass (40) während einer Durchquerung des Übergabebereichs (48) durch die Übergabeeinheit (16) jederzeit mit mindestens einem Gasauslass (26) fluidkommunizierend gekoppelt ist.

6. Vorrichtung nach Anspruch 4 oder 5, **dadurch gekennzeichnet, dass**, wenn die Luftschiene (24) mindestens zwei Gasauslässe (26) aufweist, der Gaseinlass (40) eine Öffnungsweite aufweist, die mindestens einem Abstand zwischen zwei Gasauslässen (26) entspricht.

7. Vorrichtung nach einem der Ansprüche 4 bis 6, **dadurch gekennzeichnet, dass** die Luftschiene (24) eine Ventilinsel (34) mit einer Vielzahl von die Gasauslässe (26) beherrschenden Ventilen (36) aufweist.

8. Vorrichtung nach Anspruch 7, **dadurch gekennzeichnet, dass** ein Ventil (36) nur dann geöffnet ist, wenn der Gaseinlass (40) mit dem von dem Ventil (36) beherrschten Gasauslass (26) verbunden ist.

9. Vorrichtung nach einem der Ansprüche 4 bis 8, **dadurch gekennzeichnet, dass** die Bewegungsstrecke zumindest bereichsweise linear ist.

10. Vorrichtung nach einem der Ansprüche 4 bis 9, **dadurch gekennzeichnet, dass** die Luftschiene (24) mindestens ein Endstück mit einer Anlaufschräge (28) entlang der Bewegungsstrecke aufweist.

11. Vorrichtung nach einem der Ansprüche 3 bis 10, **dadurch gekennzeichnet, dass** die Übergabeeinheit (16) einen Gleitkörper (32) aufweist, der den mindestens einen Gaseinlass (40) aufweist und gleitend auf der Luftschiene (24) gelagert ist, wenn die Übergabeeinheit (16) den Übergabereich (48) durchquert.

12. Vorrichtung nach einem der Ansprüche 3 bis 11, **dadurch gekennzeichnet, dass** die Luftschiene (24) zwischen einer Kopplungsstellung, in der die Luftschiene (24) mit einem im Übergabebereich (48) angeordneten Gaseinlass (40) koppelbar ist, und einer Entkopplungsstellung, in der die Luftschiene (24) entkoppelt von den im Übergabebereich (48) angeordneten Gaseinlässen (40) angeordnet ist, bewegbar ist.

13. Verfahren zum Herstellen von Behältern durch Umformen von Vorformlingen aus thermoplastischem Material mittels einer Vorrichtung nach einem der Ansprüche 1 bis 12, wobei das Verfahren (100) die folgenden Schritte umfasst:
- Bewegen (102) mindestens einer Formeinheit und mindestens einer Übergabeeinheit durch einen Übergabebereich, wobei die Formeinheit einen Behälter oder Vorformling aufweist und im Übergabebereich in einer Öffnungsposition ist, in der eine von Formeinsätzen der Formeinheit in einer Schließposition gebildete Kammer geöffnet ist, und wobei die mindestens eine Übergabeeinheit eine Trocknungsvorrichtung umfasst;
- Entnehmen (104) des Behälters oder Vorformlings mittels der Übergabeeinheit aus der Formeinheit;
- Auslassen (106) eines Trocknungsgasstroms aus einer Düse der Trocknungsvorrichtung in Richtung zumindest eines Teilbereiches von die Kammer ausbildenden Innenbereichen der im Übergabebereich angeordneten Formeinsätze.

## Claims

1. Device for producing containers (46) by shaping preforms (44) made of a thermoplastic material, the device (10) having a plurality of molding units (12), each of which has at least two molding inserts (14) and a plurality of transfer units (16) movable at least in a transfer region (48) for removing the container (46) or preform (44) from the molding unit (12), the mold inserts (14) being arranged inside the transfer region (48) in an opening position for transferring a container (46) or preform (44) and forming a chamber outside the transfer region (48) in a closing position for shaping the container (46) from a preform, **characterized in that** at least one of the plurality of transfer units (16) has a drying device with at least one nozzle (18) connected to the transfer unit (16) for discharging a drying gas stream (58) for drying at least a partial region of inner regions (20), which form the chamber, of the mold inserts (14) arranged in the transfer region (48).

2. Device according to claim 1, **characterized in that** the drying device has at least two nozzles (18), each nozzle (18) being directed towards a respective mold insert (14) at least in the transfer region (48).

3. Device according to claim 1 or 2, **characterized in that** the device (10) has an air rail (24) arranged in the transfer region (48) for providing the drying gas stream (58), the at least one transfer unit (16) having at least one gas inlet (40) which is connected to the at least one nozzle (18) in a fluid-communicating manner and which is connectable to the air rail (24) in a fluid-communicating manner.

4. Device according to claim 3, **characterized in that** the air rail (24) has at least one gas outlet (26) which is arranged on a movement path of the transfer unit (16) in the transfer region, the at least one gas outlet (26) being designed to discharge a drying gas stream (58), and the gas inlet (40) sweeping over the at least one gas outlet (26) in a fluid-communicating manner during a movement of the transfer unit (16) in the transfer region.

5. Device according to claim 4, **characterized in that** the gas inlet (40) is coupled in a fluid-communicating manner to at least one gas outlet (26) at any time during a passage through the transfer region (48) by the transfer unit (16).

6. Device according to claim 4 or 5, **characterized in that**, if the air rail (24) has at least two gas outlets (26), the gas inlet (40) has an opening width which corresponds to at least one distance between two gas outlets (26).

7. Device according to one of claims 4 to 6, **characterized in that** the air rail (24) has a valve terminal (34) with a plurality of valves (36) controlling the gas outlets (26).

8. Device according to claim 7, **characterized in that** a valve (36) is only open when the gas inlet (40) is connected to the gas outlet (26) controlled by the valve (36).

9. Device according to one of claims 4 to 8, **characterized in that** the movement path is at least partially linear.

10. Device according to one of claims 4 to 9, **characterized in that** the air rail (24) has at least one end piece with a run-up slope (28) along the movement path.

11. Device according to one of claims 3 to 10, **characterized in that** the transfer unit (16) has a sliding body (32) which has the at least one gas inlet (40) and is mounted slidingly on the air rail (24) when the transfer unit (16) passes through the transfer area (48).

12. Device according to one of claims 3 to 11, **characterized in that** the air rail (24) can be moved between a coupling position, in which the air rail (24) can be coupled to a gas inlet (40) arranged in the transfer region (48), and a decoupling position, in which the air rail (24) is arranged decoupled from the gas inlets (40) arranged in the transfer region (48).

13. Method of producing containers by shaping preforms made of thermoplastic material by an apparatus according to any one of claims 1 to 12, wherein the method (100) comprises the following steps:
- Moving (102) at least one molding unit and at least one transfer unit through a transfer region, wherein the molding unit comprises a container or preform and is in an opening position in the transfer region, in which a chamber formed by mold inserts of the molding unit in a closing position is open, and wherein the at least one transfer unit comprises a drying device;
- Removing (104) of the container or preform from the molding unit by the transfer unit;
- Discharging (106) of a drying gas stream from a nozzle of the drying device in the direction of at least a partial region of inner regions, which form the chamber, of the mold inserts arranged in the transfer region.

## Revendications

1. Dispositif de production de récipients (46) par formage de préformes (44) constitués d'un matériau thermoplastique, le dispositif (10) présentant une pluralité d'unités de moulage (12) qui comportent chacune au moins deux inserts de moulage (14) et une pluralité d'unités de transfert (16) mobiles au moins dans une zone de transfert (48) pour prélever le récipient (46) ou la préforme (44) de l'unité de moulage (12), les inserts de moule (14) étant disposés à l'intérieur de la zone de transfert (48) dans une position d'ouverture pour le transfert d'un récipient (46) ou d'une préforme (44) et formant à l'extérieur de la zone de transfert (48) dans une position de fermeture une chambre pour le moulage du récipient (46) à partir d'une préforme, **caractérisé en ce qu'**au moins l'une de la pluralité d'unités de transfert (16) présente un dispositif de séchage avec au moins une buse (18) reliée à l'unité de transfert (16) pour l'évacuation d'un courant de gaz de séchage (58) pour le séchage d'au moins une zone partielle de zones intérieures (20) formant la chambre des inserts de moule (14) disposés dans la zone de transfert (48).

2. Dispositif selon la revendication 1, **caractérisé en ce que** le dispositif de séchage présente au moins deux buses (18), chaque buse (18) étant dirigée au moins dans la zone de transfert (48) sur respectivement un insert de moule (14).

3. Dispositif selon la revendication 1 ou 2, **caractérisé en ce que** le dispositif (10) présente un rail d'air (24) disposé dans la zone de transfert (48) pour fournir le courant de gaz de séchage (58), l'au moins une unité de transfert (16) présentant au moins une entrée de gaz (40) reliée en communication de fluide avec l'au moins une buse (18), laquelle peut être reliée en communication de fluide avec le rail d'air (24).

4. Dispositif selon la revendication 3, **caractérisé en ce que** le rail d'air (24) présente au moins une sortie de gaz (26) qui est disposée sur un trajet de déplacement de l'unité de transfert (16) dans la zone de transfert, la au moins une sortie de gaz (26) étant conçue pour l'évacuation d'un courant de gaz de séchage (58) et l'entrée de gaz (40) balayant la au moins une sortie de gaz (26) en communication de fluide pendant un déplacement de l'unité de transfert (16) dans la zone de transfert.

5. Dispositif selon la revendication 4, **caractérisé en ce que** l'entrée de gaz (40) est couplée en communication de fluide avec au moins une sortie de gaz (26) à tout moment pendant une traversée de la zone de transfert (48) par l'unité de transfert (16).

6. Dispositif selon la revendication 4 ou 5, **caractérisé en ce que**, lorsque le rail d'air (24) comporte au moins deux sorties de gaz (26), l'entrée de gaz (40) présente une largeur d'ouverture correspondant à au moins une distance entre deux sorties de gaz (26).

7. Dispositif selon l'une des revendications 4 à 6, **caractérisé en ce que** le rail d'air (24) comprend un terminal de vannes (34) comportant une pluralité de vannes (36) dominant les sorties de gaz (26).

8. Dispositif selon la revendication 7, **caractérisé en ce qu'**une vanne (36) n'est ouverte que lorsque l'entrée de gaz (40) est reliée à la sortie de gaz (26) commandée par la vanne (36).

9. Dispositif selon l'une des revendications 4 à 8, **caractérisé en ce que** la distance de déplacement est linéaire au moins par zones.

10. Dispositif selon l'une des revendications 4 à 9, **caractérisé en ce que** le rail d'air (24) comporte au moins une partie d'extrémité présentant une pente d'approche (28) le long du trajet de déplacement.

11. Dispositif selon l'une des revendications 3 à 10, **caractérisé en ce que** l'unité de transfert (16) comprend un corps coulissant (32) comportant ladite au moins une entrée de gaz (40) et monté coulissant sur le rail d'air (24) lorsque l'unité de transfert (16) traverse la zone de transfert (48).

12. Dispositif selon l'une des revendications 3 à 11, **caractérisé en ce que** le rail d'air (24) est mobile entre une position de couplage, dans laquelle le rail d'air (24) peut être couplé à une entrée de gaz (40) disposée dans la zone de transfert (48), et une position de découplage, dans laquelle le rail d'air (24) est découplé des entrées de gaz (40) disposées dans la zone de transfert (48).

13. Procédé de production de récipients par formage de préformes constitués d'un matériau thermoplastique au moyen d'un dispositif selon l'une quelconque des revendications 1 à 12, le procédé (100) comprenant les étapes suivantes:
- Déplacer (102) au moins une unité de moulage et d'au moins une unité de transfert à travers une zone de transfert, l'unité de moulage présentant un récipient ou une préforme et étant dans une position d'ouverture dans la zone de transfert, dans laquelle une chambre formée par des inserts de moulage de l'unité de moulage dans une position de fermeture est ouverte, et l'au moins une unité de transfert comprenant un dispositif de séchage;
- enlever (104) le récipient ou la préforme de l'unité de moulage au moyen de l'unité de transfert;
- décharger (106) un courant de gaz de séchage à partir d'une buse du dispositif de séchage en direction d'au moins une zone partielle de zones intérieures, formant la chambre, des inserts de moule disposés dans la zone de transfert.
